# EUROPÄISCHE PATENTANMELDUNG

(11) **EP 0 877 197 A2**
(43) Veröffentlichungstag der Anmeldung: **11.11.1998**
(21) Anmeldenummer: 98106401.7
(22) Anmeldetag: 08.04.1998
(51) Int. Cl.: F17D 3/08, F16L 53/00

(54) **Verfahren zum Transport von geschmolzenem Schwefel und Transportanlage hierfür**

(30) Priorität: 10.05.1997 DE 19719772
(71) Anmelder: DSD Gas- und Tankanlagenbau GmbH, 13057 Berlin (DE); Kriebel, Manfred, Dr.-Ing., 64720 Michelstadt (DE)
(72) Erfinder: Kriebel, Manfred Dr.Ing, 64720 Michelstadt (DE); Hobler, Alois, Obering, 61203 Reichelsheim (DE)
(74) Vertreter: Zapfe, Hans, Dipl.-Ing.

(57) **Zusammenfassung**

Beim Transport von geschmolzenem Schwefel in Rohrleitungen (10) mit Mantelbeheizung durch ein flüssiges Heizmedium, das auf Temperaturen oberhalb des Schmelzpunktes von Schwefel aufgeheizt wird, wird zur Verringerung der Transportkosten und des Aufwandes an Technik und Energie
a) als Heizmedium Erdöl einer begleitenden Erdölleitung verwendet,
b) die Rohrleitung (10) für den Schwefel im Bereich der Trasse für die Erdölleitung (1) mit mindestens einer zwischengeschalteten Pumpstation (7, 8, 9) für die Erhöhung des Förderdrucks des Erdöls verlegt,
c) das Heizmedium Erdöl im Bereich mindestens einer der Pumpstationen (7, 8, 9) wieder aufgeheizt und auf einen erhöhten Druck gebracht und
d) der geschmolzene Schwefel (23) in der mindestens einen Pumpstation (7, 8, 9) wieder auf einen ausreichenden Förderdruck gebracht.

## Beschreibung

Die Erfindung betrifft ein Verfahren zum Transport von geschmolzenem Schwefel in Rohrleitungen mit Mantelbeheizung durch ein flüssiges Heizmedium, das auf Temperaturen oberhalb des Schmelzpunktes von Schwefel aufgeheizt wird.

Schwefel hat einen Schmelzpunkt von 118°C, wobei die Viskosität der Schmelze oberhalb von etwa 160°C erheblich zunimmt. Schwefel hat außerdem einen sehr hohen thermischen Ausdehnungskoeffizienten, was beim Einfrieren der Leitung und Wiederauftauen zu einem Bersten der Leitung führen kann, wenn dieses Auftauen zwischen noch eingefrorenen Leitungsabschnitten erfolgt.

Durch den Aufsatz von King "World's longest sulfur pipeline operating smoothly after 3 years", veröffentlicht in "Oil & Gas Journal", Januar 1997, Seiten 59 bis 65, ist ein solches Verfahren bekannt. Dabei wird über eine Distanz von 41 km als Heizmedium im Kreislauf geführtes Wasser verwendet, das bei Temperaturen zwischen 120°C und 150°C unter Drücken zwischen etwa 2 und 5 bar gehalten werden muß, von den Förderdrücken über längere Strecken einmal abgesehen. Die erforderliche Rückleitung für die Schließung des Heiz-Kreislaufs verteuert die Anlage entsprechend. Das Heizmedium muß mit einer hohen Anfangstemperatur eingespeist werden, damit die Temperatur auf dem langen Wege durch Energieverluste nicht unter den Schmelzpunkt des Schwefels absinkt. Von einer parallel verlaufenden Erdöl-Pipeline ist nicht die Rede.

Wasser hat jedoch den Nachteil, daß es korrosiv wirkt, bei einem Ausfall der Beheizung in Kältezonen selbst einfriert und die Leitung sprengt und bei einen Druckausfall oberhalb von 100°C zum Teil schlagartig verdampft, bis die Temperatur auf den Siedepunkt abgesunken ist.

Die Literaturstelle befaßt sich außerdem mit der Möglichkeit einer elektrischen Beheizung, kommt aber zu dem Schluß, daß dies noch nachteiliger ist, da Heizwiderstände eine begrenzte Lebensdauer haben und schwer bzw. praktisch nicht auswechselbar sind.

Bei der Raffination von Rohöl und bei der Aufbereitung von Erdgas entsteht Schwefel in erheblichen Mengen. Während es üblich ist, raffiniertes Erdöl über Entfernungen von mehr als 5000 km in Pipelines zu transportieren, hat man, von dem obigen Fall abgesehen, den flüssig anfallenden Schwefel in Fahrzeugen auf Straßen, Schienen und auf dem Wasser transportiert oder einfach am Ort der Raffinerie in fester Form gelagert, so daß beim Verfestigen und Wiederaufschmelzen erhebliche Energiemengen benötigt wurden. Eine Erdöl-, Erdgasanlage oder eine Raffinerie üblicher Größe produziert je nach der Rohstoffqualität pro Tag 100 bis 10.000 Tonnen Schwefel, das sind erwa 3 bis 20% der aufbereiteten Rohstoffe.

Bei Pipelines für Erdöl ist es üblich und auch notwendig, in Abständen von 70 bis 100 km Pumpstationen mit sogenannten Boosterpumpen, also Booster-Stationen anzuordnen, um den Druckabfall wieder auszugleichen.

Durch die US-A-4 137 938 ist es bekannt, flüssigen Schwefel durch eine Leitung zu transportieren, in deren Innenraum zwei Heizleitungen für die Hin- und Rückleitung eines Wärmeträgers angeordnet sind. Als Wärmeträger sind Öl, Glykol oder ähnliche Flüssigkeiten angegeben, die den Heizleitungen in Abständen entnommen und den Heizleitungen nach Wiederaufheizung erneut zugeführt werden. Eine Verlegung der Schwefelleitung parallel zu einer Erdöl-Pipeline ist jedoch nicht angesprochen, so daß der Wärmeträger auch nicht einer solchen Erdöl-Pipeline entnommen werden kann. Auch entfällt damit die Möglichkeit, einer nicht vorhandenen Erdöl-Pipeline zu Heizungszwecken durch Verbrennung Erdöl zu entnehmen. Zwar ist angegeben, daß entlang der Schwefelleitung Heiz- oder Booster-Stationen angeordnet sein können, in denen der Wärmeträger wieder aufgeheizt werden kann, jedoch sind solche Booster-Stationen lediglich auf den Wärme- und Kraftbedarf für den Schwefeltransport ausgelegt. Der Kraftbedarf für den Transport sehr viel größerer Mengen von Rohöl ist jedoch um eine Vielfaches höher, so daß insbesondere die Möglichkeit der Ausnutzung von Abwärme aus den Großturbinen von Booster-Stationen von Erdöl-Pipelines fehlt, beispielsweis der Ausnutzung des sehr großen Energiepotentials der extrem heißen Abgase von solchen Großturbinen.

Dadurch, daß der Strömungsweg für den Schwefel außen liegt und die Strömungswege für den Wärmeträger innen liegen, ergib sich ein weiteres Problem der Wärmeisolation gegen übermäßige Wärmeverluste. In der genannten Schritt wird daher vorgeschlagen, den Schwefel an der Außenwand der Leitung erstarren zu lassen, da Schwefel ein sehr schlechter Wärmeleiter ist. Dies führt aber zu drei weiteren Nachteilen: Erstens geht ein großer Teil des Strömungsweges durch den erstarrten Schwefel verloren, zweitens erstarrt der Schwefel nicht mit einer glatten Oberfläche, sondern unregelmäßig und zerklüftet, so daß sich ein hoher Strömungswiderstand einstellt, und drittens lassen sich das Wärmegleichgewicht und damit die Dicke der erstarrten Schwefelschicht praktisch nicht kontrollieren, geschweige denn konstant halten.

In dem Aufsatz "Engineering considerations for long distance sulfur lines", veröffentlicht in "PIPE LINE INDUSTRY", September 1984, Seiten 39 bis 41, werden umfangreiche Erwägungen darüber angestellt, welche der verschiedenen Beheizungsmöglichkeiten (Innenbeheizung, Außenbeheizung, Flüssigkeitsbeheizung durch heißes Wasser, Dampfbeheizung, elektrische Beheizung durch Heizwiderstände und induktive Ankopplung) und welche Arten von Wärmeisolationen (Polyurethan, Mineralwolle) vorzuziehen sind. Hauptsächlich befaßt sich dieser Aussatz jedoch mit der Entleerung und Wiederauffüllung der Schwefelleitung durch ein Verdrängungsmedium wie ein Gel oder oder ein halbfestes Schrot, ein Vorgang, der als "pigging" bezeichnet wird. Die der Erfindung zugrunde liegenden Probleme werden noch nicht einmal im Ansatz erörtert.

Der Erfindung liegt daher die Aufgabe zugrunde, ein Verfahren der eingangs beschriebenen Gattung anzugeben, durch das geschmolzener Schwefel zu vertretbaren Kosten störungsfrei über ähnliche Distanzen wie das Erdöl transportiert werden kann, ohne daß hierfür ein übertriebener technischer Aufwand und Energiebedarf erforderlich wäre.

Die Lösung der gestellten Aufgabe erfolgt bei dem eingangs angegebenen Verfahren erfindungsgemäß dadurch, daß
a) als Heizmedium Erdöl einer begleitenden Erdölleitung verwendet wird,
b) die Rohrleitung für den Schwefel im Bereich der Trasse für die Erdölleitung mit mindestens einer zwischengeschalteten Pumpstation für die Erhöhung des Förderdrucks des Erdöls verlegt wird,
c) das Heizmedium Erdöl im Bereich mindestens einer der Pumpstationen wieder aufgeheizt und auf einen erhöhten Druck gebracht wird und
d) der geschmolzene Schwefel in der mindestens einen Pumpstation wieder auf einen ausreichenden Förderdruck gebracht wird.

Das Erdöl unterliegt nicht der Gefahr einzufrieren oder gar die Leitung bzw. den Heizmantel zu sprengen oder zu korrodieren. Es steht in beliebigen Mengen zur Verfügung, und die ohnehin notwendige oder bereits vorhandene Trasse für die Erdölleitung kann zur Verlegung der Schwefel-Pipeline verwendet werden, was erhebliche Kosten spart. Insbesondere können auch die Pumpstationen für das Erdöl und ihre Einrichtungen nach entsprechender Ergänzung dazu verwendet werden, das Heizmedium Erdöl wieder auf die erforderlichen Temperaturen und Drücke zu bringen.

Der Betrieb ist mit dem vorhandenen Personal möglich. Die Energiekosten für Druck und Temperatur betragen nur wenige Prozente des Schwefelpreises und sind durchaus tragbar, und zwar auch dann, wenn der schwankende Schwefelpreis seinen Tiefststand erreicht hat. Vor allem aber ist ein sicherer Transport auch über große Entfernungen von mehreren tausend Kilometern möglich. Es können die gleichen Häfen verwendet werden, die auch für das Anlegen der Öltanker infrage kommen, der Schwefel begleitet also das Öl parallel. Ein Rücktransport des Heizmediums Öl ist nicht erforderlich, so daß eine zweite bzw. eine dritte Leitung eingespart werden kann.

In jedem Falle kann man sich beim Erfindungsgegenstand die gesamte Logistik und die technischen Einrichtungen der Öl- Pipeline zunutze machen. Die Summenmenge aus Heizmedium und Erdöl entspricht der Gesamtmenge des zu transportierenden Erdöls, so daß der Durchmesser der Öl-Pipeline entsprechend verringert werden kann. Dadurch verringern sich auch deren - anteilige - Kosten.

Es ist dabei besonders vorteilhaft, wenn an einem Einspeiseort der Trasse für das Erdöl und den geschmolzenen Schwefel ein Teil der Fördermenge des Erdöls abgezweigt und nach Aufheizung als Heizmedium in den Heizmantel eingespeist wird und wenn die Teilmenge des Erdöls an einem Endort der Trasse wieder der Hauptmenge des Erdöls zugeführt wird. Das Heizmedium wird also nur "geliehen" und steil nach Erfüllung seiner Aufgabe wieder als Erdöl zur Verfügung.

Die Fließgeschwindigkeit des Heizmediums muß nicht die gleiche sein wie die des Hauptstroms des Erdöls; sie kann durch die Wahl des Querschnitts des Ringspalts zwischen Heizmantel und Schwefelleitung in weiten Grenzen variiert werden.

Es ist dabei besonders vorteilhaft, wenn zur Aufheizung des Heizmediums ein Teil der Erdöls verbrannt wird.

Das Verfahren kann energetisch noch weiter dadurch optimiert werden, daß das als Heizmedium verwendete Erdöl mindestens teilweise durch Abwärme der Pumpenantriebe (zB. Gasturbinen) für die Hauptmenge des Erdöls und/oder für den geschmolzenen Schwefel und/oder für das Heizmedium aufgeheizt wird. Üblicherweise werden als Antriebe Gasturbinen verwendet, die sehr hohe Abgastemperaturen erzeugen. Entsprechende Energiemengen wurden bisher bei reinem Erdöltransport unter starker Umweltbelastung - auch durch Stickoxide - vergeudet.

Es ist weiterhin von Vorteil, wenn das als Heizmedium verwendete Erdöl mit einem Teil seines Wärmeinhalts in der mindestens einen Pumpstation wieder der Hauptmenge des Erdöls beigemischt wird und wenn erneut eine Teilmenge des Erdöls abgezweigt und nach erneuter Aufheizung wieder als Heizmedium verwendet und dem Heizmantel zugeführt wird.

Dadurch wird das Erdöl um geringe Beträge aufgeheizt, die aber ausreichen, um die Viskosität des Erdöls herabzusetzen, so daß hierdurch eine Reduzierung der Pumpleistung für das Erdöl erfolgt.

Die Erfindung betrifft auch eine Transportanlage für geschmolzenen Schwefel mit einer Rohrleitung mit einem Heizmantel für ein flüssiges Heizmedium.

Zur Lösung der gleichen Augabe ist eine solche Anlage erfindungsgemäß dadurch gekennzeichnet, daß
a) die Rohrleitung für den Schwefel im Bereich der Trasse für eine Erdölleitung mit mindestens einer zwischengeschalteten Pumpstation für die Erhöhung des Förderdrucks in der Erdölleitung verlegt ist,
b) zwei aufeinanderfolgende Teilabschnitte des Heizmantels in Bereich mindestens einer der Pumpstationen über eine Reihenschaltung aus einer Förderpumpe und einem Wärmetauscher miteinander verbunden sind, und daß
c) zwei aufeinanderfolgende Teilabschnitte der Rohrleitung für den Schwefel in der mindestens einen Pumpstation über eine Förderpumpe für den Schwefel miteinander verbunden sind.

Dabei ist es von besonderem Vorteil, wenn an einem Einspeiseort der Trasse für das Erdöl und den geschmolzenen Schwefel eine Zweigleitung für einen Teil der Fördermenge das Erdöls angeordnet ist und wenn der Heizmantel an einem Endort der Trasse strömungsmäßig wieder mit der Erdölleitung verbunden ist.

Im Zuge einer weiteren Ausgestaltung der Erfindung ist es wiederum von Vorteil, wenn
a) in einer Pumpleitung mit Förderpumpe für die Erdölleitung ein Regelventil angeordnet ist,
b) der Heizmantel über eine Leitung für das Heizmedium eines vorausgehenden Leitungsabschnitts für den Schwefel mit der Eingangsseite der Förderpumpe verbunden ist,
c) die Pumpleitung der Erdölleitung auf der Druckseite der Förderpumpe über eine Abzweigleitung und über einen Wärmetauscher mit dem Heizmantel eines nachfolgenden Leitungsabschnitts für den Schwefel verbunden ist, und wenn
d) in der Abzweigleitung ein Mengenmesser für das Heizmedium angeordnet ist, über den die Abzweigmenge über das Regelventil in der Pumpleitung für das Erdöl regelbar ist.

Ein besonders einfacher und kostengünstiger Aufbau ergibt sich dann, wenn die Rohrleitung für den Schwefel auf der Rohrleitung für das Erdöl montiert ist. Durch geschickte mechanische Verbindung läßt sich in diesem Fall eine tragfähige Struktur für die Überquerung oder Unterquerung von Flüssen und Sümpfen erzeugen.

Weitere vorteilhafte Ausgestaltungen des Erfindungsgegenstandes ergeben sich aus den übrigen Unteransprüchen.

Ein Ausführungsbeispiel des Erfindungsgegenstandes und Teilvariationen werden nachfolgend anhand der Figuren 1 bis 4 näher erläutert. Es zeigen:
- Figur 1: ein Anfangsstück einer Transportanlage über eine Distanz von drei Pumpstationen, also etwa 200 km, teilweise im Schnitt,
- Figur 2: einen Ausschnitt aus Figur 1, rechts, mit Ergänzungen,
- Figur 3: eine Variante des Gegenstandes nach Figur 2 und
- Figur 4: ein Wegediagramm auf der Abszisse, über der die Druck- und Temperaturschwankungen in der Schwefelleitung gemäß dem später angegebenen Ausführungsbeispiel der Erfindung auf der Ordinate aufgetragen sind.

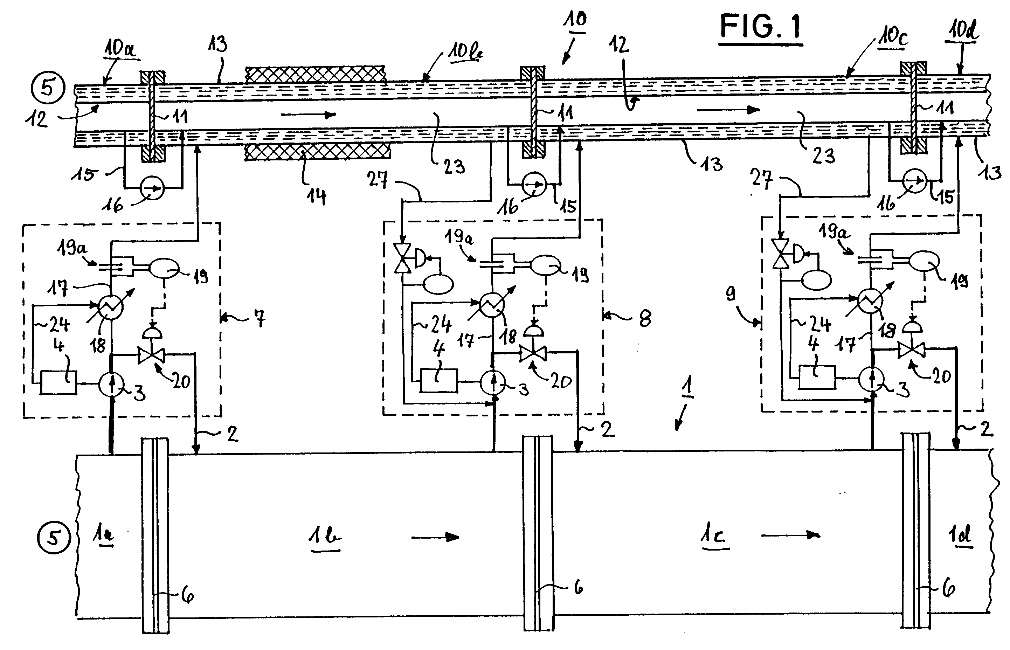

In Figur 1 ist eine Rohrleitung 1 für Erdöl dargestellt, die aus Teilabschnitten 1a, 1b, 1c und 1d besteht, die axial voneinander getrennt, aber durch Pumpleitungen 2 miteinander verbunden sind, in denen sich jeweils eine Förderpumpe 3 befindet, die durch eine Verbrennungkraftmaschine 4 (z.B. eine Gasturbine) angetrieben wird. Der Teilabschnitt 1a ist nur sehr kurz; unmittelbar vor ihm liegt der Einspeiseort 5. Die Teilabschnitte 1b, 1c und 1d sind jeweils 50 bis 100 km lang, nach rechts hin setzt sich die Anordnung praktisch beliebig fort. Die Durchmesser-/Längenverhältnisse sind extrem übertrieben und nicht maßstäblich dargestellt.

Im Bereich von Trennstellen 6 befindet sich jeweils eine Pumpstation 1, 8 und 9, zu denen die Pumpleitungen 2 und die Verbrennungskraftmaschinen 4 gehören. Insoweit handelt es sich um den klassischen Aufbau einer Transportanlage für Erdöl.

Parallel hierzu verläuft die Rohrleitung 10 für den Schwefeltransport, die aus Teilabschnitten 10a, 10b, 10c und 10d besteht. Deren Trennstellen 11 sind mit gleicher Teilung wie die Trennstellen 6 angeordnet. Die Rohrleitung 10 besteht aus Innenrohren 12 für den Schwefeltransport und aus konzentrisch hierzu angeordneten Heizmänteln 13, die auf ihrer gesamten Länge von Isolierhüllen 14 umgeben sind, von denen nur ein kurzes Teilstück gezeigt ist.

Die Innenrohre 12 der einzelnen Teilabschnitte 10a bis 10d sind in der Nähe ihrer Trennstellen 11 durch jeweils eine Pumpleitung 15 mit jeweils einer Förderpumpe 16 miteinander verbunden. Von Trennstelle zu Trennstelle sinkt der Druck von jeweils 80 bar auf etwa 12 bar ab und wird durch die Förderpumpen 16 wieder auf 80 bar angehoben. An Anfang eines jeden Teilabschnitt beträgt die Schwefeltemperatur 157°C; sie sinkt bis zur nächsten Trennstelle 11 auf etwa 125°C ab. Die Anhebung der Temperatur geschieht auf folgende Weise:

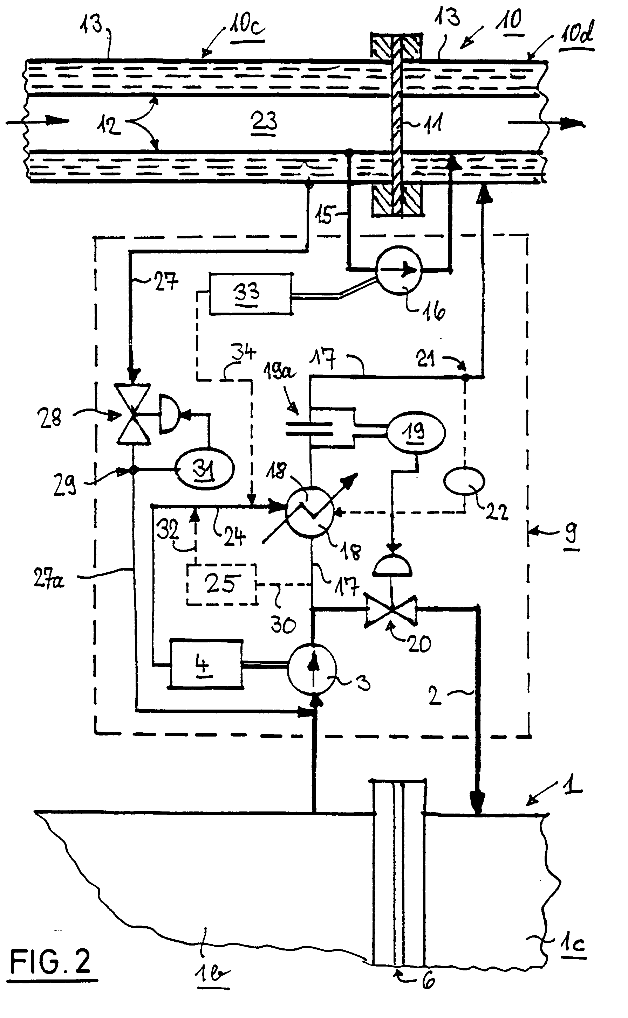

Von der Druckseite einer jeden Förderpumpe 3 für das Erdöl führt eine Abzweigleitung 17 über einen Wärmtauscher 18 zu dem jeweils anfänglichen Teil eines Heizmantels 13. Die Mengenregelung erfolgt über einem Mengemesser 19a und einen Regler 19, der auf ein Regelventil 20 einwirkt, das gleichfalls in der Pumpleitung 2 angeordnet ist. Die Temperaturregelung erfolgt über einen Temperaturfühler 21 und einen Regler 22, der auf ein nicht gezeigtes Stellglied des Wärmetauschers 18 einwirkt (Figur 2). Damit ist zunächst einmal die Energiebilanz in der strömenden Schwefelschmelze 23 ausgeglichen.

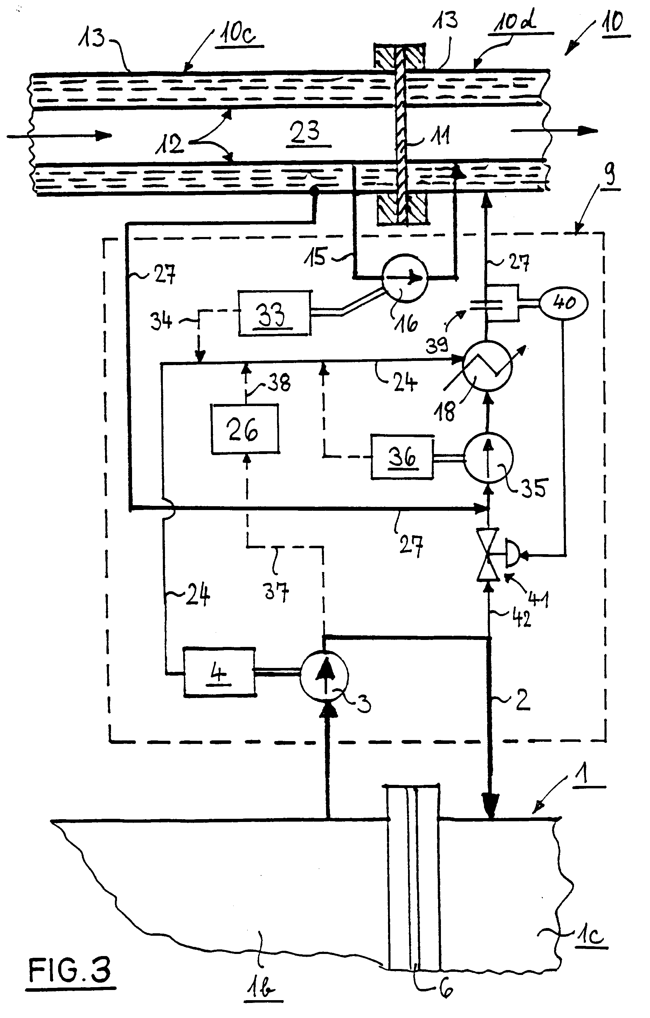

Von der Verbrennungskraftmaschine 4 führt eine Abgasleitung 24 zur Primärseite eines jeden Wärmtauschers 18, was nicht zwingend erforderlich, aber besonders wirtschaftlich ist. Alternative oder additive Möglichkeiten mit erdölbeheizten Brennkammern 25 bzw. 26 zeigen die Figuren 2 und 3.

Insoweit stimmen die Einrichtungen der Pumpstationen 7, 8 und 9 überein. In den Pumpstationen 8 und 9 findet jedoch zusätzlich über Rückflußleitungen 27 eine Rückführung des teilweise abgekühlten Heizmediums aus dem Heizmantel 13 zur Eintrittsseite der Förderpumpen 3 statt, was anhand von Figur 2 näher erläutert wird. Diesseits einer jeden Trennstelle 6 in der Erdölleitung 1 herrscht ein Druck von etwa 10 bis 12 bar, der durch die Förderpumpen 3 wieder auf etwa 80 bar angehoben wird. Das Druckgefälle zwischen dem Ende des jeweiligen Heizmantels 13 und der Eintrittsseite der Förderpumpe 3 beträgt also etwa 2 bar. In Figur 1 sind die Pumpleitungen 15 und die Förderpumpen 16 außerhalb der Pumpstationen 7, 8 und 9 dargestellt. Sie können aber vorzugsweise innerhalb der Pumpstationen 7, 8 und 9 liegen, wie dies in den Figuren 2 und 3 dargestellt ist, in denen die bisherigen Bezugszeichen unverändert übernommen wurden.

In Figur 2 sind in der Rückflußleitung 27 ein Regelventil 28 und ein Druckfühler 29 dargestellt, durch die der Druck im Leitungsteil 27a vor der Förderpumpe 3 durch einen Regler 31 auf einen vorgegebenen Wert einstellbar ist, der knapp über dem Druck des Erdöls unmittelbar vor der Trennstelle 6 liegt.

Zusätzlich ist folgendes dargestellt: Dem Erdöl bzw. Heizmedium kann auf der Druckseite der Förderpumpe 3 über eine Leitung 30 eine geringe Menge des Erdöls als Brennstoff entnommen und der Brennkammer 25 zugeführt werden, von der eine Brenngasleitung 32 über die Abgasleitung 24 zur Primärseite des Wärmetauschers 18 führt, um etwa fehlende Wärmeenergie zu erzeugen. Wird die Abgaswärme der Verbrennungsmaschine 4 nicht verwertet, so übernimmt die Brennkammer 25 die alleinige Beheizung des Wärmetauschers 18.

Die Förderpumpe 16 besitzt als Antrieb eine Verbrennungskraftmaschine 33, deren Abgase über eine Abgasleitung 34 und die Abgasleitung 24 gleichfalls der Primärseite des Wärmetauschers 18 zugeführt werden. Auch dies ist jedoch nicht zwingend erforderlich, aber energetisch vorteilhaft.

In Figur 3 sind die Förderwege des Hauptstroms des Erdöls und des Heizmediums voneinander getrennt, so daß eine dritte Förderpumpe 35 mit einer Verbrennungskraftmaschine 36 als Antrieb vorgesehen ist. Auch hierbei ist die Möglichkeit vorgesehen, dem Hauptstrom des Erdöls über eine Leitung 37 eine geringe Menge des Erdöls als Brennstoff zu entnehmen und der Brennkammer 26 zuzuführen, von der eine Brenngasleitung 38 über die Abgasleitung 24 zum Wärmetauscher 18 führt. In der Rückflußleitung 27 befindet sich ein Mengenmesser 39 (z.B. eine Meßblende) mit einem Regler 40. Dieser ist einem Regelventil 41 aufgeschaltet, das in einer Zweigleitung 42 angeordnet ist. Diese verbindet die Pumpleitung 2 auf der Druckseite der Förderpumpe 3 für den Hauptstrom des Erdöls mit der Rückflußleitung 27, so daß eventuelle (geringe) Leckmengen und/oder Volumensschwankungen des Heizmediums ausgeglichen werden können, die temperaturbedingt sind.

Es ist gezeigt, das die Abgase aller Verbrennungskraftmaschinen 4, 33 und 36 und die Brenngase der Brennkammer 26 der Primärseite des Wärmetauschers 18 zugeführt werden. Es ist jedoch möglich, die Möglichkeiten alternativ und/oder additiv vorzusehen.

Die Anordnung aus Erdölleitung und Schwefelleitung kann in der gleichen Trasse gemeinsam unterirdisch und/oder - bei entsprechender Isolierung - auch oberirdisch verlegt werden. Der Wärmetauscher 18 kann auch direkt als Heizeinrichtung ("Heater") ausgebildet sein, so daß keine gesonderte Brennkammer vorgeschaltet werden muß.

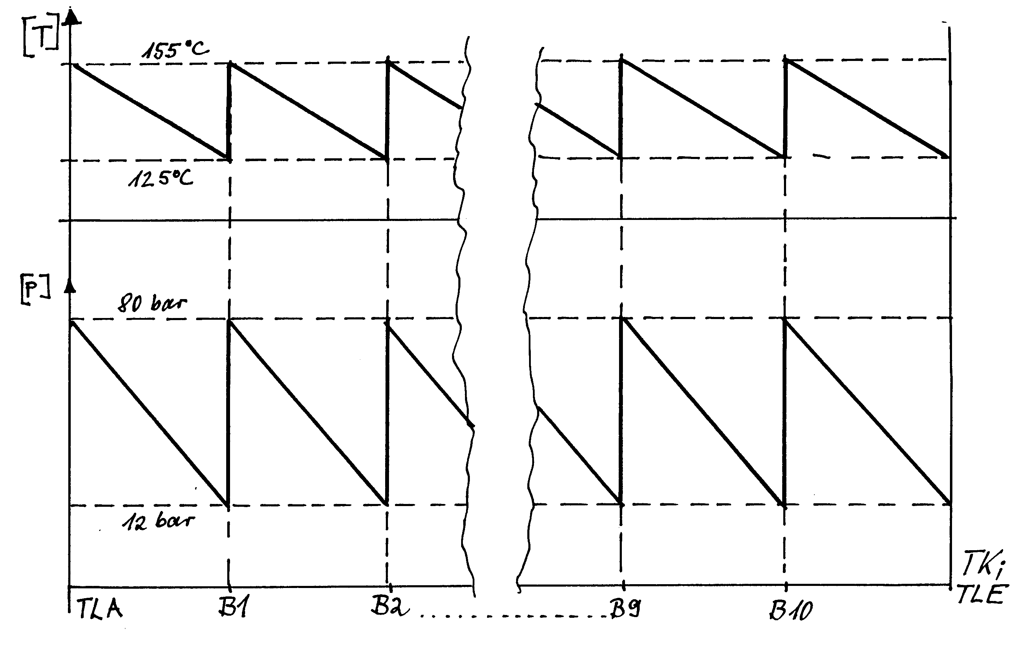

Figur 4 zeigt ein Wegediagramm bei dem auf der Abszisse der Transportweg und darüber die Druck- und Temperaturschwankungen in der Schwefelleitung gemäß dem nachstehenden Ausführungsbeispiel der Erfindung auf der Ordinate aufgetragen sind.

### Beispiel:

Durch eine Erdöl-Pipeline mit einer Länge von 1.000 km und einem inneren Durchmesser von 750 mm wurden bei einer Strömungsgeschwindigkeit von 1,75 m/s 30.000 Tonnen Rohöl pro Tag gefördert. Parallel zu dieser Erdöl-Pipeline verlief eine mantelbeheizte Schwefelleitung mit einem inneren Durchmesser von 200 mm, in der flüssiger Schwefel mit einer Geschwindigkeit von 0,7 m/s gefördert wurde. Dies entspricht einer Schwefelmenge von 10.000 Tonnen pro Tag. Um den Schwefel flüssig zu halten, mußte dieser auf Temperaturen zwischen 155°C nach der jeweiligen Aufheizung und 125°C am Ende des jeweiligen Streckenabschnitts vor jeder erneuten Aufheizung gehalten werden. Die Gesamtstrecke von 1.000 km wurde in 10 gleiche Streckenabschnitte von jeweils 100 km aufgeteilt, zwischen denen sich jeweils eine sogenannte Booster-Station für die Wiederaufwärmung des Schwefels von 125°C auf 155°C und die erforderliche Druckerhöhung befand. Der Fließdruck zu Beginn eines jeden Streckenabschnitts betrug 80 bar und am Ende des Streckenabschnitts 12 bar. Die notwendige Druckerhöhung betrug also 68 bar. Die Druckerhöhung des Rohöls erfolgte in den gleichen Booster-Stationen. Temperatur- und Druckverläufe sind in idealisierter Form in Figur 4 dargestellt, und zwar zwischen einem Anfangsterminal "TLA" über 10 Booster-Stationen B1, B2, ....., B9, B10 bis zu einem Endterminal "TLE" oder einem Tank "TK", die in den obigen Abständen angeordnet sind.

Für die Aufheizung des Schwefels von 125°C auf 155°C wurde pro Booster-Station eine Heizleistung von 1 x 10⁻⁶ kJ/h benötigt. Die Heizenergie wurde in den Schwefel über Rohöl eingebracht, das der Pipeline entnommen und in einem ölbeheizten Wärmetauscher von 135° auf 165°C aufgeheizt und einem Heizmantel zugeführt wurde, der die Schwefelleitung konzentrisch umgab. Die erforderliche Rohölmenge für die Wiedererwärmung des Öls als Wärmeträger betrug ca. 150 t/h bzw. 3.600 t/Tag. Die Menge des Wärmeträgers entsprach etwa 12 % der transportierten Rohölmenge von 30.000 t/Tag und wurde der Öl-Pipeline am Anfang des gesamten Transportweges entnommen, also "geliehen", und an dessen Ende, also am Terminal oder vor einem Öltank wieder der Hauptmenge des Rohöls zugeführt. Diese Menge des Wärmeträgers für die Mantelbeheizung der Schwefelleitung war daher nur über einen zweiten bzw. parallelen Transportweg befördert worden und entlastete den Energiebedarf für den Transport des Rohöls in der Öl-Pipeline. Der zwischen der Schwefelleitung und dem Heizmantel gebildete Ringspalt für den Wärmeträger betrug 50 mm, d.h., der Außendurchmesser der Koaxialleitung für den Schwefeltransport betrug 300 mm.

Der Energiebedarf für die Schwefelleitung betrug pro Booster-Station ca. 6 MW, wobei ca. 1 MW auf die Pumpen zur Druckerhöhung und etwa 5 MW auf die Beheizung des Wärmeträgers für den Heizmantel entfielen. Bei 10 Booster-Stationen errechnet sich für den Transport von 1.000 Tonnen Schwefel über eine Distanz von 1.000 km ein Leistungsbedarf von ca. 60 MW.

## Patentansprüche

1. Verfahren zum Transport von geschmolzenem Schwefel in Rohrleitungen (10) mit Mantelbeheizung durch ein flüssiges Heizmedium, das auf Temperaturen oberhalb des Schmelzpunktes von Schwefel aufgeheizt wird,
**dadurch gekennzeichnet**, daß
a) als Heizmedium Erdöl einer begleitenden Erdölleitung (1) verwendet wird,
b) die Rohrleitung (10) für den Schwefel im Bereich der Trasse für die Erdölleitung (1) mit mindestens einer zwischengeschalteten Pumpstation (7, 8, 9) für die Erhöhung des Förderdrucks des Erdöls verlegt wird,
c) das Heizmedium Erdöl im Bereich mindestens einer der Pumpstationen (7, 8, 9) wieder aufgeheizt und auf einen erhöhten Druck gebracht wird und
d) der geschmolzene Schwefel (23) in der mindestens einen Pumpstation (7, 8, 9) wieder auf einen ausreichenden Förderdruck gebracht wird.

2. Verfahren nach Anspruch 1, **dadurch gekennzeichnet**, daß an einem Einspeiseort (5) der Trasse für das Erdöl und den geschmolzenen Schwefel (23) ein Teil der Fördermenge des Erdöls abgezweigt und nach Aufheizung als Heizmedium in den Heizmantel (13) eingespeist wird und daß die Teilmenge des Erdöls an einem Endort der Trasse wieder der Hauptmenge des Erdöls zugeführt wird.

3. Verfahren nach Anspruch 1, **dadurch gekennzeichnet**, daß zur Aufheizung des Heizmediums ein Teil der Erdöls verbrannt wird.

4. Verfahren nach Anspruch 2, **dadurch gekennzeichnet**, daß das als Heizmedium verwendete Erdöl mindestens teilweise durch Abwärme der Pumpenantriebe für die Hauptmenge des Erdöls und/oder für den geschmolzenen Schwefel und/oder für das Heizmedium aufgeheizt wird.

5. Verfahren nach Anspruch 2, **dadurch gekennzeichnet**, daß das als Heizmedium verwendete Erdöl mit einem Teil seines Wärmeinhalts in der mindestens einen Pumpstation (7, 8, 9) wieder der Hauptmenge des Erdöls beigemischt wird, daß erneut eine Teilmenge des Erdöls abgezweigt und nach erneuter Aufheizung wieder als Heizmedium verwendet und dem Heizmantel (13) zugeführt wird.

6. Verfahren nach Anspruch 2, **dadurch gekennzeichnet**, daß die jeweils abgezweigte Teilmenge des Heizmediums druck- und/oder mengenabhängig geregelt wird.

7. Verfahren nach Anspruch 1, **dadurch gekennzeichnet**, daß die Temperatur des Schwefels (23) durch das Heizmedium wischen 120°C und 160°C, vorzugsweise zwischen 125°C und 157°C, gehalten wird.

8. Transportanlage für geschmolzenen Schwefel mit einer Rohrleitung (10) mit einem Heizmantel (13) für ein flüssiges Heizmedium,
**dadurch gekennzeichnet**, daß
a) die Rohrleitung (10) für den Schwefel (23) im Bereich der Trasse für eine Erdölleitung (1) mit mindestens einer zwischengeschalteten Pumpstation (7, 8, 9) für die Erhöhung des Förderdrucks in der Erdölleitung (1) verlegt ist,
b) zwei aufeinanderfolgende Teilabschnitte (10a, 10b, 10c, 10d) des Heizmantels (13) in Bereich mindestens einer der Pumpstationen (7, 8, 9) über eine Reihenschaltung aus einer Förderpumpe (3, 35) und einem Wärmetsuscher (18) miteinander verbunden sind, und daß
c) zwei aufeinanderfolgende Teilabschnitte (10a, 10b, 10c, 10d) der Rohrleitung (10) für den Schwefel (23) in der mindestens einen Pumpstation (7, 8, 9) über eine Förderpumpe (16) für den Schwefel (23) miteinander verbunden sind.

9. Transportanlage nach Anspruch 8, **dadurch gekennzeichnet**, daß an einem Einspeiseort (5) der Trasse für das Erdöl und den geschmolzenen Schwefel (23) eine Zweigleitung (17) für einen Teil der Fördermenge das Erdöls angeordnet ist und daß der Heizmantel (13) an einem Endort der Trasse strömungsmäßig wieder mit der Erdölleitung (1) verbunden ist.

10. Transportanlage nach Anspruch 8, **dadurch gekennzeichnet**, daß bei Verwendung von Verbrennungskraftmaschinen (4, 33, 36) als Pumpenantriebe für das Erdöl und/oder das Heizmedium die Abgasenergie der Verbrennungskraftmaschinen (4, 33, 36) dem oder einem Wärmetauscher (18) für das Heizmedium zuführbar ist.

11. Transportanlage nach Anspruch 10, **dadurch gekennzeichnet**, daß
a) in einer Pumpleitung (2) mit Förderpumpe (3) für die Erdölleitung (1) ein Regelventil (20) angeordnet ist,
b) der Heizmantel (13) über eine Leitung (27) für das Heizmedium eines vorausgehenden Leitungsabschnitts (10b, 10c, 10d) für den Schwefel (23) mit der Eingangsseite der Förderpumpe (3) verbunden ist,
c) die Pumpleitung (2) der Erdölleitung (1) auf der Druckseite der Förderpumpe (3) über eine Abzweigleitung (17) über einen Wärmetauscher (18) mit dem Heizmantel (13) eines nachfolgenden Leitungsabschnitts (10b, 10c, 10d) für den Schwefel (23) verbunden ist,
und daß
d) in der Abzweigleitung (17) ein Mengenmesser (19a) für das Heizmedium angeordnet ist, über den die Abzweigmenge über das Regelventil (20) in der Pumpleitung (2) für das Erdöl regelbar ist.

12. Transportanlage nach Anspruch 8, **dadurch gekennzeichnet**, daß zwei Teilabschnitte (10b, 10c, 10d) des Heizmantels (13) über eine zweite Förderpumpe (35) und einen Wärmetauscher (18) miteinander verbunden sind.

13. Transportanlage nach Anspruch 10, **dadurch gekennzeichnet**, daß der Wärmetauscher (18) für das Heizmedium auf seiner Primärseite an mindestens eine Wärmequelle aus der Gruppe
a) Verbrennungskraftmaschine (4) der Förderpumpe (3) für das Erdöl,
b) Verbrennungskraftmaschine (36) der Förderpumpe (35) für das Heizmedium und
c) Brennkammer (25, 26) für Erdöl
angeschlossen ist.

14. Transportanlage nach Anspruch 8, **dadurch gekennzeichnet**, daß die Rohrleitung (10) für den Schwefel auf der Rohrleitung (1) für das Erdöl montiert ist.
